# EUROPEAN PATENT APPLICATION

(11) **EP 4 841 071 A1**
(43) Date of publication of application: **18.11.2026**
(21) Application number: 26174352.0
(22) Date of filing: 24.04.2026
(51) Int. Cl.: F01D 17/16

(54) **VARIABLE VANE ASSEMBLY, COMPRESSOR AND GAS TURBINE**

(30) Priority: 09.05.2025 KR 20250060115
(71) Applicant: Doosan Enerbility Co., Ltd., Seongsan-gu Changwon-si, Gyeongsangnam-do 51711 (KR)
(72) Inventor: CHUNG, Jaehoon, 51415 Gyeongsangnam-do (KR); CHOI, Jaewoo, 51711 Gyeongsangnam-do (KR)
(74) Representative: Ter Meer und Partner mbB

(57) **Abstract**

A variable vane assembly (500) includes a hub (570) and a shroud (580), to which a vane shaft (541) is axially fixed, a variable vane (510) rotatably installed between the hub (570) and the shroud (580) and that adjusts an amount of air introduced, and a blocking member (590) installed in the hub (570) and the shroud (580) facing the variable vane (510), and that blocks a first gap (S1) between the variable vane (510) and the hub (570) and a second gap (S1) between the variable vane (510) and the shroud (580).
A compressor (100) includes a compressor casing (101) and the variable vane assembly (500), wherein the hub (570) and the shroud (580) are mounted on an inner side of the compressor casing (101), and wherein the vane shaft (541) rotatably is coupled to, and extends through, the compressor casing (101), the vane shaft (541) extending from the shroud (580) to the hub (570).
A gas turbine (10) includes the compressor (100) configured to suction and compress external air; a combustor (200) configured to mix fuel with the air compressed by the compressor (100) and combust a mixture; and a turbine (300), in which turbine blades (320) and turbine vanes (330) are mounted in an interior thereof, the turbine blades (320) being rotated by combustion gas discharged from the combustor (200).

## Description

This application claims the benefit of priority to Korean Patent Application No. 10-2025-0060115, filed in the Korean Intellectual Property Office on May 9, 2025.

### TECHNICAL FIELD

The present disclosure relates to a variable vane assembly, and a compressor and a gas turbine including the same.

### BACKGROUND

Generally, a turbine is a mechanical apparatus that obtains a rotational force with impulse force or reaction force by using a flow of a compressible fluid, such as steam or gas, and examples thereof include a steam turbine using steam and a gas turbine using high-temperature combustion gas.

A gas turbine is configured to convert thermal energy into mechanical energy by injecting high-temperature and high-pressure combustion gas that is generated by burning a mixture of high-pressure compressed air compressed by a compressor, and fuel, into a turbine to rotate the turbine.

More specifically, a gas turbine includes a compressor that compresses air, a combustor that burns compressed air supplied from the compressor and fuel to generate combustion gas, and a turbine that rotates a rotor by means of turbine blades that are rotated by high-temperature and high-pressure combustion gas discharged from the combustor.

The gas turbine has a plurality of turbine vanes and turbine blades that are alternately disposed in a turbine casing. Furthermore, a rotor is disposed to pass through central portions of the compressor, the combustor, the turbine, and an exhaust chamber.

Opposite ends of the rotor are rotatably supported by bearings. Furthermore, a plurality of disks are fixed to the rotor, and the respective blades are connected thereto, and a drive shaft, such as a power generator, is connected to an end of the exhaust chamber.

In particular, the compressor includes a plurality of variable vanes that are coupled to a casing to be angle-adjustable, so that an inflow amount of external air may be adjusted. Compressors are configured as either a centrifugal type or an axial type, and an axial compressor is used in a gas turbine generator having an output of 5 MW or more.

In such an axial compressor, a variable vane serves to adjust an amount of air introduced into the compressor, and an operation and an angle adjustment of the variable vane are performed such that the variable vane is rotated together by rotational driving of a vane shaft. Furthermore, the variable vane may adjust an amount of air during startup and shutdown of the gas turbine, so that vibration may be prevented.

The variable vane precisely adjusts an inflow amount of air to provide startup stability and protects the compressor from surge during startup and shutdown, so that an efficiency of the gas turbine may be improved.

However, in a conventional variable vane, because a gap is formed between a hub and a shroud, when the variable vane is rotated, a flow of air occurs between the gaps due to a pressure difference, and turbulence, that is, flow vortices, occurs in air flowing toward the variable vane due to the generated flow of air. That is, flow loss that affects an aerodynamic performance of the compressor occurs due to turbulence generated in air flowing through the variable vane.

Accordingly, in order to reduce a flow loss, development of a variable vane assembly is required to adjust a position of a trunnion or improve performance.

### SUMMARY

The present invention has been made to solve the above-mentioned problems occurring in the prior art while advantages achieved by the prior art are maintained intact. It is an object of the present invention to provide a variable vane assembly capable of preventing flow vortices of air generated by a gap and improving an aerodynamic performance of a compressor, as well as a compressor and a gas turbine including the same.

An aspect of the present invention provides a variable vane assembly capable of preventing flow vortices of air generated by a gap and improving an aerodynamic performance of a compressor by applying a blocking member to a hub and a shroud to compensate for a gap generated between a variable vane and the hub and between the variable vane and the shroud, and a compressor and a gas turbine including the same.

Objects of the present invention are not limited to the above-mentioned object, and other objects and advantages of the present invention that are not mentioned will be understood from the following description, and it will be apparently understood from an embodiment of the present invention. In addition, it will be easily understood that the objects and advantages of the present invention are realized by means and combinations described in the appended claims.

According to an aspect of the present invention, a variable vane assembly includes a hub and a shroud, to which a vane shaft is axially fixed, a variable vane rotatably installed between the hub and the shroud and that adjusts an amount of air introduced, and a blocking member installed in the hub and the shroud facing the variable vane, and that blocks a gap between the variable vane and the hub and a gap between the variable vane and the shroud.

According to an aspect of the present invention, a variable vane assembly comprises: a hub and a shroud, to which a vane shaft is axially fixed; a variable vane rotatably installed between the hub and the shroud and configured to adjust an amount of air introduced; and a blocking member installed in each of the hub and the shroud facing the variable vane, and configured to block a first gap between the variable vane and the hub and a second gap between the variable vane and the shroud.

According to an embodiment of the present invention, the blocking member may include at least one of a first blocking part installed in the hub corresponding to a lower end portion of the variable vane, and a second blocking part installed in the shroud corresponding to an upper end portion of the variable vane.

According to an embodiment of the present invention, the blocking member may include a brush including a bristle bundle extending by a predetermined length from one surface of the hub and the shroud toward the variable vane.

According to an embodiment of the present invention, a length of the blocking member may correspond to a width between the hub and the variable vane and a width between the shroud and the variable vane.

According to an embodiment of the present invention, an accommodation recess into which the blocking member is inserted and coupled may be formed on one surface of the hub and the shroud.

According to an embodiment of the present invention, the blocking member may be formed of a flexible metal material.

According to an aspect of the present invention, a compressor includes a compressor casing and a variable vane assembly according to any one of the herein described aspects and embodiments.

According to an aspect of the present invention, a compressor includes a compressor casing, a hub and a shroud mounted on an inner side of the compressor casing, the vane shaft being axially fixed to the inner side, a variable vane rotatably installed between the hub and the shroud and that adjusts an amount of air introduced, and a blocking member installed in the hub and the shroud facing the variable vane, and that blocks a gap between the variable vane and the hub and a gap between the variable vane and the shroud.

According to an aspect of the present invention, a compressor includes a compressor casing; a hub and a shroud mounted on an inner side of the compressor casing, a vane shaft rotatably coupled to, and extending through, the compressor casing, the vane shaft extending through the shroud to the hub being axially fixed to the inner side; a variable vane rotatably installed between the hub and the shroud and configured to adjust an amount of air introduced; and a blocking member installed in each of the hub and the shroud facing the variable vane, and configured to block a first gap between the variable vane and the hub and a second gap between the variable vane and the shroud.

According to an embodiment of the present invention, the blocking member may include at least one of a first blocking part installed in the hub corresponding to a lower end portion of the variable vane, and a second blocking part installed in the shroud corresponding to an upper end portion of the variable vane.

According to an embodiment of the present invention, the blocking member may include a brush including a bristle bundle extending by a predetermined length from one surface of the hub and the shroud toward the variable vane.

According to an embodiment of the present invention, a length of the blocking member may correspond to a width between the hub and the variable vane and a width between the shroud and the variable vane.

According to an embodiment of the present invention, an accommodation recess into which the blocking member is inserted and coupled may be formed on one surface of the hub and the shroud.

According to an embodiment of the present invention, the blocking member may be formed of a flexible metal material.

According to an aspect of the present invention, a gas turbine includes: a compressor configured to suction and compress external air; a combustor configured to mix fuel with the air compressed by the compressor and combust a mixture; and a turbine, in which turbine blades and turbine vanes are mounted in an interior thereof, the turbine blades being rotated by combustion gas discharged from the combustor, wherein the compressor is a compressor according to any one of the herein described aspects and embodiments.

According to an aspect of the present invention, a gas turbine includes a compressor that suctions and compresses external air, a combustor that mixes fuel with the air compressed by the compressor and combusts a mixture, and a turbine, in which turbine blades and turbine vanes are mounted in an interior thereof, the turbine blades being rotated by combustion gas discharged from the combustor, and the compressor includes a compressor casing, a hub and a shroud mounted on an inner side of the compressor casing, the vane shaft being axially fixed to the inner side, a variable vane rotatably installed between the hub and the shroud and that adjusts an amount of air introduced, and a blocking member installed in the hub and the shroud facing the variable vane, and that blocks a gap between the variable vane and the hub and a gap between the variable vane and the shroud.

According to an embodiment of the present invention, the blocking member may include at least one of a first blocking part installed in the hub corresponding to a lower end portion of the variable vane, and a second blocking part installed in the shroud corresponding to an upper end portion of the variable vane.

According to an embodiment of the present invention, the blocking member may include a brush including a bristle bundle extending by a predetermined length from one surface of the hub and the shroud toward the variable vane.

According to an embodiment of the present invention, a length of the blocking member may correspond to a width between the hub and the variable vane and a width between the shroud and the variable vane.

According to an embodiment of the present invention, an accommodation recess into which the blocking member is inserted and coupled may be formed on one surface of the hub and the shroud.

According to an embodiment of the present invention, the blocking member may be formed of a flexible metal material.

### BRIEF DESCRIPTION OF THE DRAWINGS

The above and other objects, features and advantages of the present invention will be more apparent from the following detailed description taken in conjunction with the accompanying drawings:
FIG. 1 is a view illustrating a gas turbine according to an embodiment of the present invention;
FIG. 2 is an enlarged view of a portion of a compressor according to an embodiment of the present invention;
FIG. 3 is a view illustrating a variable vane assembly provided in a compressor according to an embodiment of the present invention; and
FIG. 4 is a view illustrating the blocking member of FIG. 3, as viewed from above.

### DETAILED DESCRIPTION

Hereinafter, some embodiments of the present invention will be described in detail with reference to the accompanying drawings. In adding reference numerals to the components of the drawings, it should be noted that the same components have the same numerals as possible even when they are illustrated on different drawings. In describing embodiments of the present invention, detailed descriptions associated with well-known functions or configurations will be omitted if they may make subject matters of the present invention unnecessarily obscure.

Furthermore, in describing components of embodiments of the present invention, the terms first, second, A, B, (a), (b), and the like may be used herein. These terms are only used to distinguish one component from another component, but do not limit the corresponding components irrespective of the nature, order, or priority of the corresponding components. When it is described that a certain component is "connected to", "coupled to" or "electrically connected to" a second component, it should be understood that the component may be directly connected or electrically connected to the second component, but a third component may be "connected", "coupled" or "electrically connected" between the components.

Hereinafter, embodiments of the present invention will be described in detail with reference to accompanying drawings.

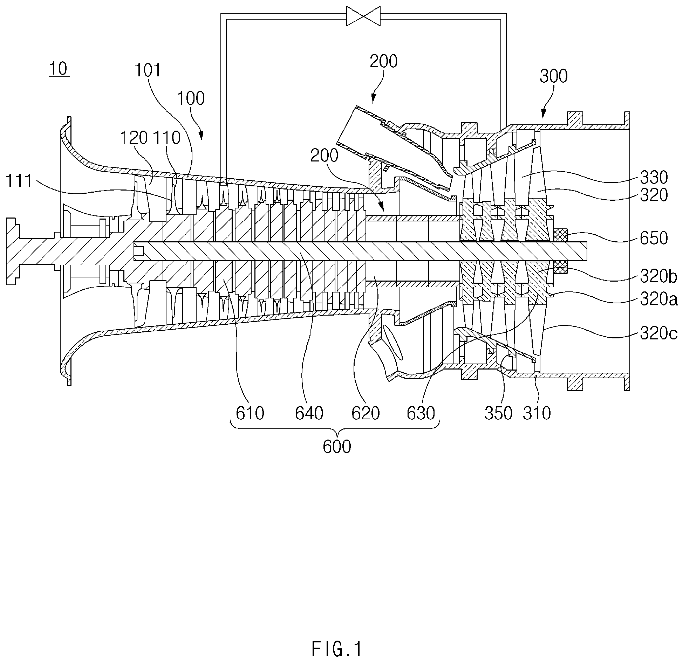

FIG. 1 is a view illustrating a gas turbine according to an embodiment of the present invention.

A gas turbine 10 according to a preferred embodiment of the present invention may be configured to suction air in the atmosphere and compress the air to a high pressure, combust fuel in a constant-pressure environment to release thermal energy, and expand the high-temperature combustion gas to convert the thermal energy into kinetic energy.

Referring to the drawings, the gas turbine 10 may include a compressor 100 that suctions and compresses air, a combustor 200 that mixes the air compressed in the compressor 100 with fuel and combusts the air, and a turbine 300 that generates a rotational force as combustion gas discharged from the combustor 200 passes through a turbine blade 320 and a turbine vane 330 in a turbine casing 310.

The compressor 100 may be installed to suction and compress air from the outside.

As an example, the compressor 100 may supply cooling air to a high-temperature area of the gas turbine 10, which requires cooling, while supplying compressed air that is compressed by compressor blades 110 to the combustor 200.

Various compressors 100 may be used as the compressor 100 according to required conditions and design specifications, and the present invention is not limited by a type and a structure of the compressor 100.

As an example, the compressor 100 may be designed as a centrifugal compressor or an axial compressor, and a centrifugal compressor may be used in a small-sized gas turbine and a multi-stage axial compressor may be used in a large-sized gas turbine. However, the present invention is not limited thereto.

According to a preferred embodiment of the present invention, the compressor 100 may include a compressor blade 110 that is rotated together with a rotor 600 and a compressor vane 120 that is installed in a compressor casing 101 to align flow of the air that is introduced into the compressor blade 110.

The rotor 600 may include a compressor rotor disk 610 that is accommodated in the compressor casing 101, a turbine rotor disk 630 that is accommodated in the turbine casing 310, a torque tube 620 that is accommodated in a combustor casing (not illustrated) and connects the compressor rotor disk 610 and the turbine rotor disk 630, and a tie rod 640 and a retaining nut 650 that fasten the compressor rotor disk 610, the torque tube 620, and the turbine rotor disk 630.

A plurality of compressor rotor disks 610 may be formed, and the plurality of compressor rotor disks 610 may be arranged along an axial direction of the rotor 600. The compressor rotor disks 610 may be formed in multiple stages.

Furthermore, each compressor rotor disk 610 may be formed in a substantially disk shape, and a compressor blade coupling slot (not illustrated) that is coupled to the compressor blade 110 may be formed at an outer peripheral portion of the compressor rotor disk 610.

The turbine rotor disk 630 may be formed similarly to the compressor rotor disk 610. A plurality of turbine rotor disks 630 may be formed, and the plurality of turbine rotor disks 630 may be arranged in multiple stages along an axial direction of the rotor 600.

Furthermore, each turbine rotor disk 630 may be formed in a substantially disk shape, and a turbine blade coupling slot that is coupled to the turbine blade 320 may be formed at an outer peripheral portion of the turbine rotor disk 630.

The torque tube 620 may be disposed between the compressor 100 and the turbine 300 to transfer a rotational torque generated in the turbine 300 to the compressor 100. As an example, the torque tube 620 is a torque transmission member that transmits rotational force of the turbine rotor disk 630 to the compressor rotor disk 610, and one end portion thereof may be fastened to the compressor rotor disk 610 that is located at a most downstream end in an airflow direction among a plurality of compressor rotor disks 610, and an opposite end portion thereof may be fastened to the turbine rotor disk 630 that is located at a most upstream end in a combustion gas flow direction among a plurality of turbine rotor disks 630.

Projections (not illustrated) may be formed at a one end portion and an opposite end portion of the torque tube 620, respectively, and grooves (not illustrated) that are engaged with the projections may be formed in the compressor rotor disks 610 and the turbine rotor disks 630, respectively, such that relative rotation of the torque tube 620 with respect to the compressor rotor disks 610 and the turbine rotor disks 630 may be constrained.

The torque tube 620 may be formed in a substantially hollow cylindrical shape such that air supplied from the compressor 100 may flow to the turbine 300 through the torque tube 620.

The torque tube 620 may be formed to have strong characteristics against deformation and torsion due to the characteristics of the gas turbine 10 operated continuously for a long time, and may be configured to be easily assembled and disassembled for easy repair and maintenance.

The tie rod 640 may be formed to pass through a plurality of compressor rotor disks 610, the torque tube 620, and a plurality of turbine rotor disks 630, and a one end portion thereof may be fastened into the compressor rotor disk 610 that is located at a most upstream end in an airflow direction among the plurality of compressor rotor disks 610, and an opposite end portion thereof may protrude to a side opposite to the compressor 100 with respect to the turbine rotor disk 630 that is located at a most downstream end in a combustion gas flow direction among the plurality of turbine rotor disks 630, and may be fastened to the retaining nut 650.

The retaining nut 650 may press the turbine rotor disk 630 that is located at a most downstream end toward the compressor 100, and as a distance between the compressor rotor disk 610 that is located at a most upstream end and the turbine rotor disk 630 that is located at a most downstream end decreases, a plurality of compressor rotor disks 610, the torque tube 620, and a plurality of turbine rotor disks 630 may be compressed in an axial direction of the rotor 600. Accordingly, axial movement and relative rotation of the plurality of compressor rotor disks 610, the torque tube 620, and the plurality of turbine rotor disks 630 may be constrained.

In an embodiment of the present invention, although the tie rod 640 is described as passing through central portions of a plurality of compressor rotor disks 610, the torque tube 620, and a plurality of turbine rotor disks 630, separate tie rods 640 may also be provided at the compressor 100 side and the turbine 300 side, respectively. Furthermore, a plurality of tie rods 640 may also be configured to be radially arranged along a circumferential direction.

The rotor 600 according to this configuration may have opposite end portions rotatably supported by bearings, and a one end portion thereof may be connected to a drive shaft of a generator.

A plurality of compressor blades 110 may be formed, and the plurality of compressor blades 110 may be formed in multiple stages along an axial direction of the rotor 600, and the plurality of compressor blades 110 may be formed radially along a rotational direction of the rotor 600 at each stage.

A root part 111 formed at a lower end of the compressor blade 110 may be coupled to the compressor blade coupling slot of the compressor rotor disk 610, and the root part 111 may be formed in a tapered shape having serrations on opposite sides to prevent the compressor blade 110 from being separated from the compressor blade coupling slot in a rotation radius direction of the rotor 600, that is, in a fir-tree shape. In this case, the compressor blade coupling slot may also be formed in a fir-tree shape to correspond to the root part 111 of the compressor blade 110.

Although the root part 111 of the compressor blade 110 and the compressor blade coupling slot are described as being formed in a tapered shape, the root part 111 of the compressor blade 110 and the compressor blade coupling slot may also be formed in a dovetail shape or in other shapes. Furthermore, the compressor blade 110 may also be fastened to the compressor rotor disk 610 by using a separate fastening device, such as a key or a bolt.

The compressor rotor disk 610 and the compressor blade 110 may generally be coupled in a tangential type or an axial type, and in an embodiment of the present invention, the root part 111 of the compressor blade 110 may be formed in a so-called axial type in which the root part 111 is inserted into the compressor blade coupling slot along an axial direction of the rotor 600.

A plurality of compressor blade coupling slots may be formed, and the plurality of compressor blade coupling slots may be radially arranged along a circumferential direction of the compressor rotor disk 610.

A plurality of compressor vanes 120 may be formed, and the plurality of compressor vanes 120 may be formed in multiple stages along an axial direction of the rotor 600. Here, the compressor vanes 120 and the compressor blades 110 may be alternately arranged along an airflow direction.

Furthermore, the plurality of compressor vanes 120 may be formed radially along a rotational direction of the rotor 600 at each stage. In this case, some of the plurality of compressor vanes 120 correspond to variable vanes 510 (variable guide vanes) that are coupled to the compressor casing 101 such that an angle thereof may be adjusted, so that an amount of air introduced into the compressor 100 is adjusted.

The variable vane 510 may increase or decrease an amount of air introduced into the compressor 100 as an angle thereof is adjusted in various operation conditions, for example, in an opened or closed state when the gas turbine 10 is started or stopped.

As an example, the variable vane 510 includes a streamlined body 511, and the body includes a leading edge part LE that is formed to have a predetermined width, and a trailing edge part TE that is formed to have a width that is smaller than that of the leading edge part LE.

A curved surface having a plurality of bending parts (not illustrated) is formed on an inner side surface of the body 511 of the variable vane 510, and an arc shape is formed on an outer side surface thereof, and the body 511 of the variable vane 510 forms a predetermined length with respect to the hub 570 and the shroud 580. That is, an inlet side through which air is introduced may be referred to as the leading edge part LE, and an outlet side through which air is discharged may be referred to as the trailing edge part TE.

The combustor 200 may be configured to generate high-energy combustion gas by mixing the compressed air supplied from the compressor 100 with fuel and combusting the compressed air under constant pressure.

Various combustors 200 that may mix compressed air with fuel and combust the compressed air may be used as the combustor 200, and the present invention is not limited by a type and a structure of the combustor 200.

As an example, a plurality of combustors 200 may be provided, and the plurality of combustors 200 may be arranged in a combustor casing (not illustrated) along a rotational direction of the rotor 600.

The combustor 200 may include a liner (not illustrated), into which compressed air compressed by the compressor 100 is introduced, and a transition piece (not illustrated) that is located on a rear side of the liner to guide combustion gas to the turbine 300. The liner and the transition piece form a combustion chamber in an interior thereof, and a sleeve may be disposed to surround the liner and the transition piece to form an annular flow space between them.

Furthermore, the combustor 200 may include a fuel injection nozzle (not illustrated) that is provided at a front side of the liner to inject a mixture of compressed air supplied from the compressor 100 and fuel, and an ignition plug (not illustrated) that is provided on a wall of the liner such that the compressed air and the fuel mixed in a combustion chamber of the liner are ignited. Thereafter, the burned gas is discharged to the turbine 300 to generate rotation.

In this case, cooling the liner and the transition piece that are exposed to high-temperature and high-pressure combustion gas is an important part for increasing durability of the combustor 200. To this end, cooling holes (not illustrated) may be formed in the sleeve, and as compressed air that is introduced through the cooling holes collides vertically with outer wall parts of the liner and the transition piece, the liner and the transition piece may be cooled.

More specifically, the compressed air introduced from the compressor 100 may be introduced into an annular space through cooling holes formed in a sleeve to cool the liner and the transition piece, may flow toward a front side of the liner along the annular space, and may be introduced into a fuel injection nozzle.

Furthermore, a de-swirler that serves as a guide vane to adjust a flow angle of air introduced into the combustor 200 to a designed flow angle may also be provided between the compressor 100 and the combustor 200.

High-temperature and high-pressure exhaust gas generated in the combustor 200 may be supplied to the turbine 300, and in the turbine 300, thermal energy of the exhaust gas may be converted into mechanical energy that rotates a rotary shaft by applying a collision and a reaction force to a plurality of turbine blades 320 that are radially disposed on the rotary shaft of the turbine 300 while the exhaust gas is adiabatically expanded.

A portion of the mechanical energy generated in the turbine 300 may be utilized as energy that is necessary to compress the air in the compressor 100, and the remaining portions thereof may be utilized as effective energy, for example, to drive a power generator to produce electric power.

The turbine 300 may be formed similarly to the compressor 100. The turbine 300 may include a turbine blade 320 that is rotated together with the rotor 600, and a turbine vane 330 that is fixedly installed in the turbine casing 310 through a turbine vane carrier 350 to align a flow of air introduced into the turbine blade 320.

As an example, a plurality of turbine blades 320 may be formed, and the plurality of turbine blades 320 may be formed in multiple stages along an axial direction of the rotor 600, and the plurality of turbine blades 320 may be radially formed along a rotational direction of the rotor 600 at each stage.

Specifically, the turbine blade 320 may include a plate-shaped platform part 320a, a root part of the turbine blade 320 that extends from the platform part 320a toward a centripetal side of the rotor 600 in a rotation radius direction, and a blade part 320c of the turbine blade 320 that extends from the platform part 320a of the turbine blade 320 toward a centrifugal side of the rotor 600 in the rotation radius direction.

The platform part 320a of the turbine blade 320 may contact a platform part 320a of another adjacent turbine blade 320 to maintain a spacing between the blade parts 320c of the turbine blades 320.

The root part 320b of the turbine blade 320 may be coupled to a turbine blade coupling slot of the turbine rotor disk 630, and the root part 320b may be formed in a tapered shape having serrations on opposite sides thereof, that is, a fir-tree shape to prevent the turbine blade 320 from deviating from the turbine blade coupling slot in the rotation radius direction of the rotor 600. In this case, the turbine blade coupling slot may be formed in a fir-tree shape to correspond to the root part 320b of the turbine blade 320. The root part 320b of the turbine blade 320 may be formed in a so-called axial type in which the root part 320b is inserted into the turbine blade coupling slot along an axial direction of the rotor 600.

The blade part 320c of the turbine blade 320 may be formed to have an airfoil shape that is optimized according to specifications of the gas turbine 10, and may include a leading edge part LE that is located at an upstream side in a flow direction of combustion gas such that the combustion gas is introduced, and a trailing edge part TE that is located at a downstream side in the flow direction of the combustion gas such that the combustion gas is discharged.

A plurality of turbine vanes 330 may be formed, and the plurality of turbine vanes 330 may be formed in multiple stages along an axial direction of the rotor 600. Here, the turbine vanes 330 and the turbine blades 320 may be alternately arranged along an airflow direction. Furthermore, the plurality of turbine vanes 330 may be radially formed along a rotational direction of the rotor 600 at each stage.

As an example, each turbine vane 330 may be fixedly supported inside a turbine housing by a vane carrier 350 that is an end wall coupled to an inner end and an outer end of the turbine vane 330.

Unlike the compressor 100, the turbine 300 contacts the high-temperature and high-pressure combustion gas, and thus requires a cooling means for preventing damage, such as thermal degradation. To this end, it may include a cooling line (not illustrated) for drawing the compressed air from a specific part of the compressor 100 and supplying it to the turbine 300.

In the gas turbine 10 according to this configuration, air that is introduced through a casing may be compressed by the compressor 100.

Air compressed by the compressor 100 may be mixed with fuel by the combustor 200 and then combusted to become combustion gas, combustion gas generated in the combustor 200 may be introduced into the turbine 300, and the combustion gas introduced into the turbine 300 may rotate the rotor 600 through the turbine blade 320 and then may be discharged to the atmosphere through a diffuser.

The rotor 600 that is rotated by the combustion gas may drive the compressor 100 and a generator. That is, a part of mechanical energy obtained from the turbine 300 may be supplied as energy required for compressing air in the compressor 100, and a remaining part thereof may be used for generating electric power by a generator.

The gas turbine 10 described above is only an embodiment of the present invention, and a variable vane assembly 500 of the present invention, which will be described in detail below, may be applied not only to a general gas turbine 10 but also to an axial-flow fluid machine in which the variable vane assembly 500 is installed.

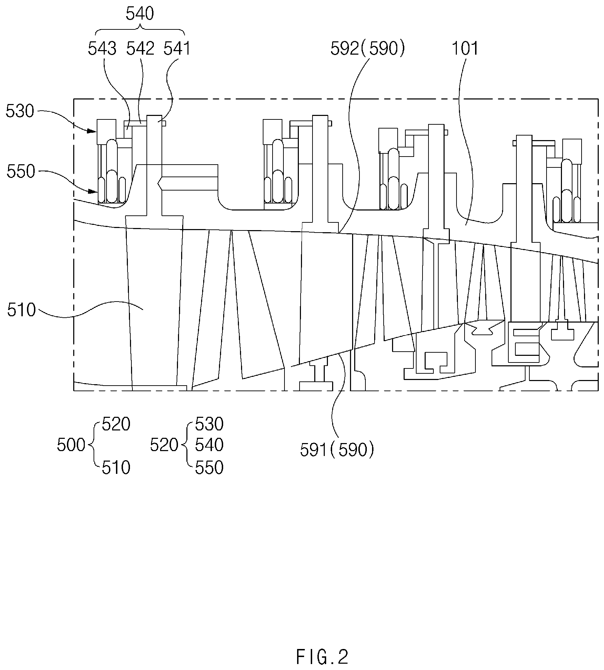

FIG. 2 is an enlarged view of a portion of a compressor according to an embodiment of the present invention.

Referring to FIG. 2, in an embodiment of the present invention, a description will be given of the variable vane assembly 500 that includes a variable vane 510 that is included in the compressor 100, and a variable vane driving device 520 for driving the variable vane 510.

The variable vane driving device 520 of the variable vane assembly 500 may include a drive ring 530, a rotation link part 540, and a ring support part 550.

The drive ring 530 is disposed to surround the casing outside the compressor casing 101, and may be rotated by a rotation driving device, such as an actuator.

The drive ring 530 and the variable vane 510 of each stage may be connected by the rotation link part 540 so that an angle of the variable vane 510 may be adjusted by rotation of the drive ring 530.

The rotation link part 540 may include a vane shaft 541 that is connected to the variable vane 510 and passes through the compressor casing 101 from an inner side to an outer side, a link piece 542 that is installed on the vane shaft 541 such that relative rotation is impossible, and a link pin 543 that couples the link piece 542 to the drive ring 530.

The vane shaft 541 is formed along a longitudinal direction of the variable vane 510, and the link piece 542 is coupled such that the vane shaft 541 passes through a hole formed at one end of the link piece 542 so that the link piece 542 is perpendicular to the vane shaft 541.

Accordingly, when the drive ring 530 is rotated in one direction about an axis of the rotor 600, the link piece 542 is rotated in the one direction through the link pin 543, and the vane shaft 541 that is installed such that relative rotation is impossible is rotated together therewith.

By rotation of the drive ring 530, a plurality of variable vanes 510 of each stage may be switched simultaneously to the same angle, so that a flow rate of air flowing therethrough may be adjusted.

The ring support part 550 is installed on the compressor casing 101 to rotatably support the drive ring 530. To this end, a plurality of ring support parts 550 may be disposed to be spaced apart from each other in a circumferential direction of the drive ring 530, and may support the drive ring 530 such that the drive ring 530 may be rotated about an axial line of the rotor 600.

The ring support part 550 is installed on a radially inner side of the drive ring 530, and a position thereof in a radial direction of the drive ring 530 may be adjusted in a state in which the ring support part 550 is installed on the compressor casing 101.

The variable vane assembly 500 may include a hub 570 in which a suction hole (not illustrated) is formed. The variable vane assembly 500 may include a shroud 580 in which a discharge hole (not illustrated) is formed and that is coupled to the hub 570. The vane shaft 541 may be axially fixed to the hub 570 and the shroud 580.

The variable vane 510 of the variable vane assembly 500 is rotated by the vane shaft 541 and is provided to guide air introduced therethrough toward the turbine side.

A plurality of variable vanes 510 are installed between the hub 570 and the shroud 580 to be rotated. Specifically, a plurality of variable vanes 510 may be installed in the hub 570 and the shroud 580 to be rotated by the vane shaft 541. The plurality of variable vanes 510 may adjust an amount of air suctioned by adjusting a space between adjacent variable vanes 510.

Meanwhile, a bearing 560 may be installed between the vane shaft 541 and the variable vane 510 on a hub 570 side, and between the vane shaft 541 and the variable vane 510 on a shroud 580 side. Accordingly, a first gap S1 may be formed between the hub 570 side and the variable vane 510, and a second gap S2 may be formed between the shroud 580 side and the variable vane 510.

Air flow due to a pressure difference may occur in the first gap S1 and the second gap S2. When air flow occurs in the first gap S1 and the second gap S2 as described above, turbulence (flow vortex) may occur in air that flows toward the variable vane 510.

Because a flow loss that affects an aerodynamic performance of the compressor occurs due to turbulence generated in air that flows through the variable vane 510, the present invention proposes the variable vane assembly 500 that may cancel or minimize the turbulence, the compressor 100 including the same, and the gas turbine 10.

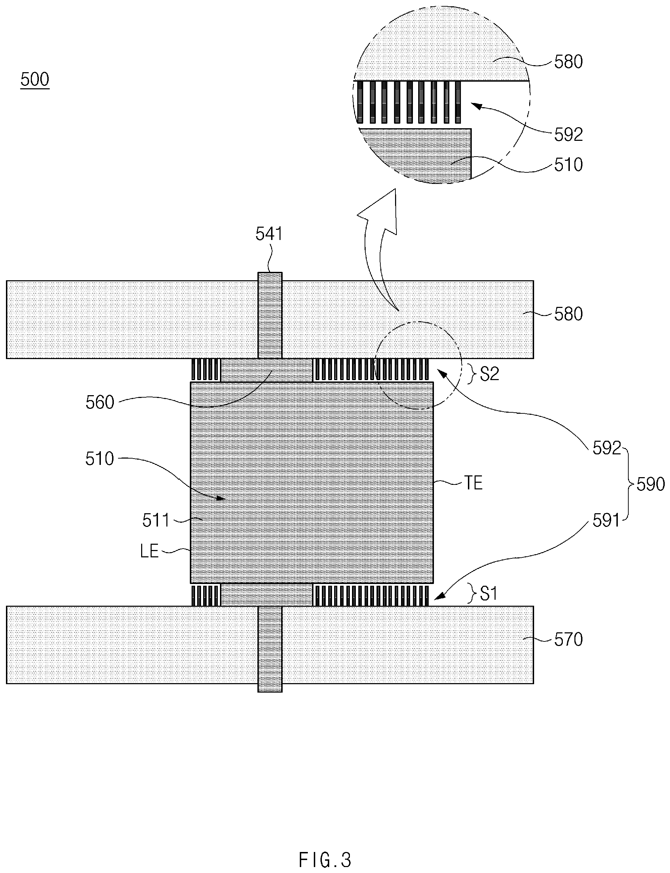

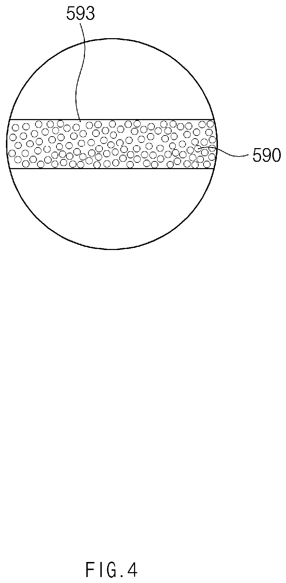

FIG. 3 is a view illustrating the variable vane assembly 500 provided in the compressor 100 according to an embodiment of the present invention, and FIG. 4 is a view illustrating the blocking member 590 of FIG. 3 as viewed from above.

The first gap S1 between the hub 570 side of the compressor 100 and the variable vane 510 and the second gap S2 between the shroud 580 side and the variable vane 510 may be effectively closed to minimize flow loss. In particular, the variable vane assembly 500 may close the first gap S1 and the second gap S2 during a rotation operation of the variable vane 510 to control fluid to flow smoothly in a lateral direction of the variable vane 510.

Referring to the drawings, the variable vane assembly 500 may include the hub 570, the shroud 580, and the variable vane 510. In this case, because the hub 570, the shroud 580, and the variable vane 510 are the same as those described above, a detailed description thereof will be omitted.

Meanwhile, the variable vane assembly 500 may include a blocking member 590 that is installed on at least one of between the hub 570 and the variable vane 510 and between the shroud 580 and the variable vane 510. As an example, the blocking member 590 may be installed in at least one of the first gap S1 between the hub 570 and the variable vane 510 and the second gap S2 between the shroud 580 and the variable vane 510.

The blocking member 590 may be installed in the first gap S1 or may be installed in the second gap S2. Furthermore, the blocking member 590 may be installed in the first gap S1 and the second gap S2. Hereinafter, for convenience of description, a case in which the blocking member 590 is installed in the first gap S1 and the second gap S2 will be mainly described.

The blocking member 590 may include a first blocking part 591 that is installed on the hub 570 corresponding to a lower end portion of the variable vane 510, and a second blocking part 592 that is installed on the shroud 580 corresponding to an upper end portion of the variable vane 510.

In this case, the first blocking part 591 is installed on one surface of the hub 570 that faces the variable vane 510, and the second blocking part 592 may be installed on one surface of the shroud 580 that faces the variable vane 510.

The first blocking part 591 and the second blocking part 592 may be installed by being implanted inward from one surface of the hub 570 and the shroud 580.

The first blocking part 591 and the second blocking part 592 may include a brush that is coupled to a bristle bundle (bristle) that extends by a predetermined length from one surface of the hub 570 and the shroud 580 toward the variable vane 510 that faces the one surface. In this case, the bristle bundle may be made of a flexible metal material.

The bristle bundle may be installed such that a plurality of single bristles are implanted over an entire surface of one surface of the hub 570 and the shroud 580.

An implantation spacing of single bristles that are basic particles of the bristle bundle may be maintained at a spacing at which a plurality of the single bristles may be uniformly combined with each other. As an example, when another single bristle adjacent to a single bristle enters such that the single bristles interfere with each other and gather, it is preferable to maintain a certain spacing so that a bristle density of the bristle bundle may be uniformly increased.

Referring to FIG. 4, with respect to one surface of the hub 570 and the shroud 580, an accommodation recess 593 having a predetermined shape may be formed in a cross-sectional portion of the hub 570 and the shroud 580. The first blocking part 591 and the second blocking part 592 of the blocking member 590 may be inserted into and coupled to the accommodation recess 593.

As described above, the blocking member 590 that is formed of a brush to which a bristle bundle having a predetermined length is coupled may extend from the accommodation recess 593 toward the variable vane 510.

The blocking member 590 including the first blocking part 591 installed on an upper surface of the hub 570 and the second blocking part 592 installed on a lower surface of the shroud 580 may contact a lower surface and an upper surface of the corresponding variable vane 510 to seal and block the first gap S1 and the second gap S2. In other words, because the bristle bundle of the brush constituting the blocking member 590 interferes with each other and gathers to secure airtightness, the blocking member 590 acts as a blocking wall that effectively blocks the first gap S1 between the variable vane 510 and the hub 570 and the second gap S2 between the variable vane 510 and the shroud 580.

The blocking member 590 that is formed on one surface of the hub 570 and the shroud 580 facing the variable vane 510 may be worn or detached by an end portion of the variable vane 510 due to continuous rotation operation of the variable vane 510. Accordingly, it is necessary to secure the blocking member 590 that has durability or may be easily replaced so that damage of the variable vane 510 or an increase in the first gap S1 and the second gap S2, which may occur due to wear or detachment of the blocking member 590, may be prevented.

Accordingly, the blocking member 590 may effectively block the first gap S1 between the variable vane 510 and the hub 570 and the second gap S2 between the variable vane 510 and the shroud 580, thereby preventing turbulence of air to minimize flow loss and improving an aerodynamic performance of the compressor.

According to the variable vane assembly according to the present invention having the configuration described above, and the gas turbine including the same, by applying the blocking member to the hub and the shroud to compensate for the gap generated between the variable vane and the hub and between the variable vane and the shroud of the compressor, it is possible to prevent flow vortices of air generated by the gap and improve a surge margin as well as improve the aerodynamic performance of the compressor.

The above-mentioned description of the present disclosure is intended to be illustrative, and it should be understood by those skilled in the art that the present disclosure may be embodied in other specific forms without departing from the essential characteristics thereof. Therefore, the above-described embodiments are examples in all aspects, and should be construed not to be restrictive. The scope of the present disclosure is defined by claims to be described below, and it should be interpreted that the scopes or claims of the present disclosure and all modifications or changed forms derived from the equivalent concept are included in the scopes of the present disclosure.

## Claims

1. A variable vane assembly comprising:
a hub and a shroud, to which a vane shaft is axially fixed;
a variable vane rotatably installed between the hub and the shroud and configured to adjust an amount of air introduced; and
a blocking member installed in each of the hub and the shroud facing the variable vane, and configured to block a first gap between the variable vane and the hub and a second gap between the variable vane and the shroud.

2. The variable vane assembly of claim 1, wherein the blocking member includes at least one of:
a first blocking part installed in the hub corresponding to a lower end portion of the variable vane; and
a second blocking part installed in the shroud corresponding to an upper end portion of the variable vane.

3. The variable vane assembly of claim 1 or 2, wherein the blocking member includes a brush including a bristle bundle extending by a predetermined length from one surface of the hub and the shroud toward the variable vane.

4. The variable vane assembly according to any one of the preceding claims, wherein a length of the blocking member corresponds to a width between the hub and the variable vane and a width between the shroud and the variable vane.

5. The variable vane assembly according to any one of the preceding claims, wherein an accommodation recess into which the blocking member is inserted and coupled is formed on one surface of the hub and the shroud.

6. A compressor comprising:
a compressor casing; and
a variable vane assembly according to any one of claims 1 to 5,
wherein the hub and the shroud are mounted on an inner side of the compressor casing, and the vane shaft rotatably is coupled to, and extends through, the compressor casing, the vane shaft extending from the shroud to the hub .

7. The compressor of claim 6, wherein the vane shaft extends through the shroud and/or through the hub.

8. A gas turbine comprising:
a compressor configured to suction and compress external air;
a combustor configured to mix fuel with the air compressed by the compressor and combust a mixture; and
a turbine, in which turbine blades and turbine vanes are mounted in an interior thereof, the turbine blades being rotated by combustion gas discharged from the combustor,
wherein the compressor is a compressor according to claims 6 or 7.
